# FASCICULE DE BREVET EUROPEEN

(11) **EP 2 219 151 B1**
(45) Date de publication et mention de la délivrance du brevet: **09.05.2012**
(21) Numéro de dépôt: 10152183.9
(22) Date de dépôt: 29.01.2010
(51) Int. Cl.: G06T 1/00, G08G 1/0962, G08G 1/16, B60Q 1/00

(54) **Dispositif de fourniture d'images représentatives de la zone avant située devant un véhicule et de la position de ce dernier dans la zone située en aval de cette zone avant, et procédé associé**
Vorrichtung zur Gewinnung von Bildern, die sowohl eine erste Zone vor einem Fahrzeug, als auch die Position dieses Fahrzeugs in einer Zone unmittelbar hinter der ersten Zone darstellen
Device for providing images of the area in front of a vehicle, and for representing the position of said vehicle in the zone situated immediately behind said front area, with associated process

(30) Priorité: 13.02.2009 FR 0950923
(43) Date de publication de la demande: 18.08.2010
(73) Titulaire: Peugeot Citroën Automobiles SA, 78140 Vélizy-Villacoublay (FR)
(72) Inventeur: Moslard, Vincent, 78000 Versailles (FR)
(74) Mandataire: Vigand, Régis Louis Michel

(56) Documents cités:
- US-A1- 2007 009 137
- US-B1- 6 429 789
- US-B1- 7 050 908

## Description

L'invention concerne les véhicules, éventuellement automobiles, et plus précisément la fourniture aux passagers (et notamment aux conducteurs) de tels véhicules d'images représentatives de l'environnement dans lequel évolue leurs véhicules.

Comme le sait l'homme de l'art, certains véhicules, éventuellement de type automobile, sont équipés d'au moins un écran d'affichage sur lequel peuvent être affichées des images d'environnement qui sont représentatives de la zone avant qui se trouve située devant eux. Ces images d'environnement (réelles ou virtuelles) sont générées à partir de données d'images vidéo qui sont acquises avec une caméra implantée dans le véhicule, comme cela est notamment décrit dans les documents brevet EP 1065642, US 7,167,779 et US 2001/010540.

L'inconvénient principal de ces images d'environnement réside dans le fait qu'elles ne représentent que la zone avant qui se trouve située devant le (ou en amont du) véhicule, et donc ne matérialisent pas la position effective du véhicule par rapport à cette zone avant. Par conséquent, ces images d'environnement ne reflètent pas bien ce qu'observe effectivement le conducteur du fait de sa position à l'intérieur de son véhicule.

L'invention a donc pour but d'améliorer la situation.

Elle propose à cet effet un dispositif, dédié à la fourniture d'images pour un passager d'un véhicule (éventuellement automobile), muni d'un écran propre à afficher des images constituées par des données, et comprenant :
- des moyens de traitement chargés de traiter des données, issues d'une caméra et constituant des images vidéo d'une zone avant située devant le véhicule, afin de former des premiers ensembles de données qui constituent chacun une image principale représentative de la zone avant et destinée à être affichée par l'écran dans une première partie, et
- des moyens de calcul chargés de déterminer à partir de chaque premier ensemble de données un second ensemble de données constituant une image complémentaire, représentative, d'une part, d'une zone complémentaire située au moins en partie juste derrière la zone avant et dans laquelle est situé le véhicule, et d'autre part, de la position de ce véhicule, et destinée à être affichée par l'écran dans une seconde partie complémentaire de la première partie.
- Le document US 2007/00009137 divulgue un système de vision par caméra dans un véhicule selon lequel une prise de vue vers l'avant est transformée par un convertisseur de point de vue (« view point conversion apparatus », paragraphe 71) afin de générer une image comme si celle-ci était prise de derrière le véhicule, et incluant une représentation schématique du véhicule (voir paragraphe 74 et figures 4 et 6).

Le dispositif selon l'invention peut comporter d'autres caractéristiques qui peuvent être prises séparément ou en combinaison, et notamment :
- ses moyens de calcul peuvent être chargés de déterminer des marquages au sol dans chaque premier ensemble de données, puis de déterminer des prolongements de certains au moins des marquages au sol déterminés dans la zone complémentaire en vue de leur affichage au sein d'une image complémentaire dans la seconde partie de l'écran ;
   ➢ ses moyens de calcul peuvent être chargés de déterminer les prolongements de marquage au sol par reproduction et transformation des pixels des données des images principales qui définissent les marquages au sol au voisinage de leurs côtés inférieur et latéraux ;
- chaque image complémentaire peut encadrer l'image principale associée sur son côté inférieur et au moins l'un de ses deux côtés latéraux ;
- ses moyens de calcul peuvent être chargés de former des seconds ensembles de données constituant chacun une image complémentaire virtuelle comportant une représentation de la zone complémentaire et une représentation du véhicule dans cette zone complémentaire en une position correspondant à sa position réelle ;
- la représentation du véhicule peut être une vue schématique de sa partie arrière ;
- ses moyens de traitement et/ou ses moyens de calcul peuvent être implantés dans un ordinateur de bord du véhicule ;
- il peut comprendre la caméra et/ou l'écran.

L'invention propose également un procédé, dédié à la fourniture d'informations pour un passager d'un véhicule (éventuellement automobile), muni d'un écran propre à afficher des images constituées par des données, et consistant :
- à acquérir au moyen d'une caméra des données qui constituent des images vidéo d'une zone avant située devant le véhicule,
- à traiter les données d'image vidéo acquises afin de former des premiers ensembles de données qui constituent chacun une image principale représentative de la zone avant et destinée à être affichée par l'écran dans une première partie, et
- à déterminer à partir de chaque premier ensemble de données un second ensemble de données constituant une image complémentaire, représentative, d'une part, d'une zone complémentaire située au moins en partie juste derrière la zone avant et dans laquelle est situé le véhicule, et d'autre part, de la position du véhicule, et destinée à être affichée par l'écran dans une seconde partie complémentaire de la première partie.

D'autres caractéristiques et avantages de l'invention apparaîtront à l'examen de la description détaillée ci-après, et des dessins annexés, sur lesquels :
- la figure 1 illustre schématiquement et fonctionnellement un exemple de dispositif de fourniture d'images selon l'invention partiellement implanté dans un ordinateur de bord d'une voiture, et
- la figure 2 est un exemple d'image d'environnement générée par un dispositif de fourniture d'images selon l'invention et affichée par un écran d'affichage implanté dans un habitacle de véhicule.

Les dessins annexés pourront non seulement servir à compléter l'invention, mais aussi contribuer à sa définition, le cas échéant.

L'invention a pour objet d'offrir un dispositif de fourniture d'images D destiné à être implanté dans un véhicule (VA).

Dans ce qui suit, on considère, à titre d'exemple non limitatif, que le véhicule est une voiture. Mais, l'invention n'est pas limitée à ce type de véhicule automobile. Elle concerne en effet tout type de véhicule, automobile ou non, dès lors qu'il peut circuler sur des voies terrestres ou de navigation.

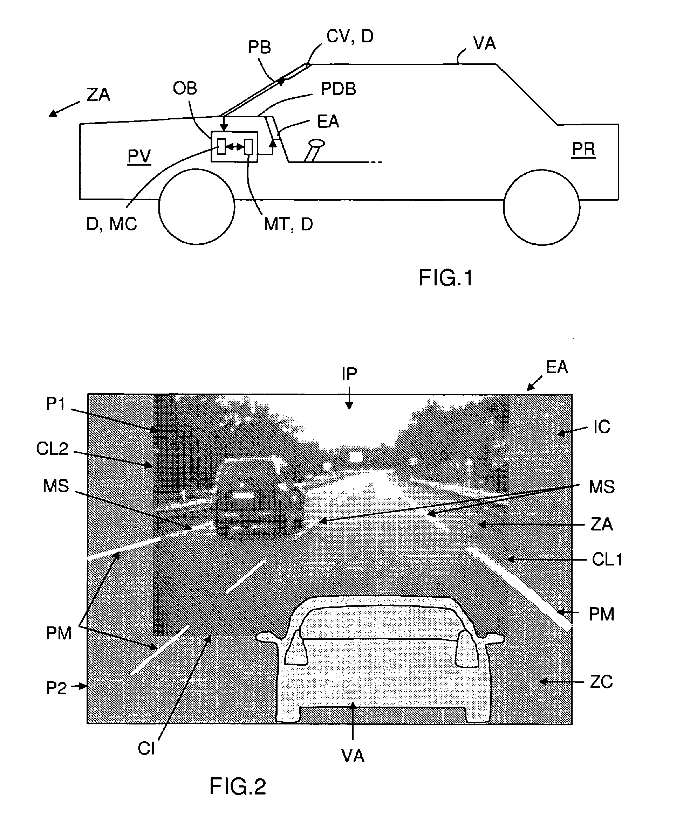

On a schématiquement représenté sur la figure 1 une voiture VA équipée d'un exemple de réalisation d'un dispositif de fourniture d'images D selon l'invention, d'un ordinateur de bord OB et d'un écran d'affichage EA.

Cet écran d'affichage EA est classiquement chargé d'afficher des images qui sont constituées par des ensembles de données qui lui sont transmis par l'ordinateur de bord OB. Par exemple, et comme illustré, l'écran EA est implanté dans la façade avant de la planche de bord PDB de la voiture VA (l'important étant qu'il soit au moins dans le champ d'observation du conducteur). Cet écran d'affichage EA peut afficher tout type d'image, et notamment des images vidéo, des images cartographiques (par exemple fournies par un équipement de navigation), des images ne contenant que des informations textuelles, et des images (semi-)virtuelles (c'est-à-dire résultant d'un traitement d'images vidéo).

Un dispositif de fourniture d'images D, selon l'invention, comprend au moins un module de traitement MT et un module de calcul MC.

Le module de traitement MT est chargé de traiter des données qui sont issues d'une caméra CV et qui constituent des images vidéo d'une zone avant ZA qui est située devant la voiture VA (c'est-à-dire en amont de sa partie avant PV), afin de former des premiers ensembles de données qui constituent chacun une image principale IP représentative de la zone avant ZA et destinée à être affichée par l'écran EA dans une première partie P1 de ce dernier (voir figure 2).

On comprendra qu'une image principale IP n'occupe qu'une partie (P1) de la zone de l'écran EA qui est dédiée à l'affichage.

Comme cela est illustré non limitativement sur la figure 1, la caméra CV peut par exemple être installée à l'intérieur de l'habitacle de la voiture VA contre la face interne du pare-brise PB, dans une position centrale de son extrémité supérieure (qui est solidarisée au toit). Mais, elle pourrait être implantée en tout autre endroit dès lors que celui-ci permet d'acquérir des images vidéo de la zone avant (ou amont) ZA qui précède la voiture VA. Ainsi, elle pourrait par exemple être implantée dans le pare-choc avant.

Par exemple, la caméra CV transmet les données d'image vidéo qu'elle acquiert à l'ordinateur de bord OB, qui se charge alors de les communiquer au module de traitement MT. On notera qu'il n'est pas nécessaire que la caméra CV délivre des images vidéo de grande qualité.

On notera également que la caméra CV peut éventuellement faire partie du dispositif D, en particulier si elle ne sert qu'à acquérir des images vidéo qui ne servent qu'à lui (D).

Il est important de noter que les images principales IP qui sont délivrées (sous forme de premiers ensembles de données) par le module de traitement MT peuvent être sensiblement identiques aux, ou issues des, images vidéo qui sont délivrées par la caméra CV. On entend ici par « image principale IP issue d'une image vidéo » une image qui fait l'objet d'un ou plusieurs traitements vidéo. Tout type de traitement vidéo peut être effectué dès lors qu'il produit une image principale IP représentative de la zone avant ZA. A titre d'exemple, on peut appliquer aux images vidéo une ou plusieurs déformations et/ou un ou plusieurs effets de style.

On comprendra donc qu'une image principale IP produite (et délivrée) par le module de traitement MT, et devant être affichée, est soit une image partiellement (ou semi) virtuelle, c'est-à-dire constituée par traitement(s) vidéo d'une image vidéo délivrée par la caméra CV, soit une image réelle, c'est-à-dire n'ayant pas fait l'objet d'un traitement vidéo (autre qu'une mise à l'échelle ou un changement de couleurs et/ou de contraste).

Le module de calcul MC est chargé de déterminer, à partir de chaque premier ensemble de données produit par le module de traitement MT et définissant une image principale IP, un second ensemble de données qui constitue une IC image complémentaire de l'image principale IP. Selon l'invention, et comme illustré sur la figure 2, chaque image complémentaire IC est représentative, d'une part, d'une zone complémentaire ZC qui est située au moins en partie juste derrière la zone avant ZA et dans laquelle est située la voiture VA, et d'autre part, de la position de cette voiture VA, et destinée à être affichée par l'écran EA dans une seconde partie P2 de ce dernier (EA) qui est complémentaire de sa première partie P1.

On entend ici par « juste derrière » le fait d'être placé géographiquement (au moins en partie) en aval de la zone avant ZA (laquelle est alors considérée comme placée en amont).

Par exemple, et comme illustré non limitativement sur la figure 2, la seconde partie P2 de l'écran EA encadre la première partie P1 de ce dernier (EA) sur un côté inférieur CI et au moins un côté latéral CLi (i = 1 ou 2). Dans l'exemple illustré, la seconde partie P2 encadre la première partie P1 sur son côté inférieur CI et ses deux côtés latéraux CL1 et CL2. Par conséquent, chaque image complémentaire IC encadre ici l'image principale IP associée sur son côté inférieur et ses deux côtés latéraux, et donc chaque zone complémentaire ZC se trouve située non seulement derrière (ou en aval de) la zone avant ZA associée, mais également sur les deux côtés latéraux (à droite et à gauche) de cette zone avant ZA.

De préférence et comme illustré non limitativement, les portions de la seconde partie P2 qui encadrent les deux côtés latéraux CLi de la première partie P1 présentent sensiblement la même largeur.

Le positionnement de la zone complémentaire ZC et de la voiture VA par rapport à la zone avant ZA est aisé dans la mesure où le champ d'observation de la caméra CV est fixe, et donc que les coordonnées précises de la zone complémentaire ZC et de la voiture VA par rapport à chaque image vidéo de la zone avant ZA sont prédéterminées.

Comme illustré non limitativement, chaque image complémentaire IC peut par exemple matérialiser des prolongements PM de certains au moins des marquages au sol MS qui sont présents (et observables) dans l'image principale IP associée. Ces marquages au sol MS sont par exemple les lignes de différents types qui délimitent les voies de circulation sur lesquelles circulent les véhicules VA. Dans ce cas, le module de calcul MC est tout d'abord chargé de déterminer s'il existe des marquages au sol MS dans chaque premier ensemble de données délivré par le module de traitement MT, puis dans l'affirmative il détermine des prolongements PM dans la zone complémentaire ZC de certains au moins des marquages au sol MS qu'il a déterminés dans la zone avant ZA, en vue de leur affichage au sein d'une image complémentaire IC dans la seconde partie P2 de l'écran EA.

Cette détermination de prolongements PM peut se faire par extrapolation, par exemple en « reproduisant » les pixels des données d'une image principale IP qui définissent les marquages au sol MS, dont une extrémité est située dans le voisinage de son côté inférieur CI ou de l'un de ses côtés latéraux CLi, en leur appliquant une transformation (ou loi d'échelle) fonction de la forme desdits marquages au sol MS de sorte qu'ils prolongent ces derniers (MS).

On notera qu'un prolongement PM peut éventuellement (comme illustré) reproduire le caractère discontinu d'un marquage au sol MS. Mais, cela n'est pas obligatoire. En effet, un prolongement PM peut être un trait continu qui part d'un bord extérieur d'une image principale IP (dans l'axe d'un marquage au sol MS) et qui se termine sur un bord extérieur de l'image complémentaire IC associée.

On notera également qu'un prolongement PM peut éventuellement reproduire le caractère curviligne d'un marquage au sol MS.

Toute technique connue de l'homme de l'art et permettant de déterminer la forme et/ou l'allure (continue ou discontinue) d'un marquage au sol MS peut être ici utilisée, et notamment la reconnaissance de forme par confrontation à des éléments simples et complexes stockés dans une bibliothèque d'images d'éléments.

On notera également que le module de calcul MC peut éventuellement reproduire dans une image complémentaire IC l'aspect général de ce qu'il observe dans une image principale IP, notamment pour ce qui concerne les couleurs ainsi qu'éventuellement la texture. Cela peut ainsi permettre de matérialiser virtuellement dans une image complémentaire IC une ou plusieurs voies de circulation visibles sur l'image principale IP associée.

Par exemple, et comme cela est illustré non limitativement sur la figure 2, la représentation de la voiture VA, qui est affichée sur l'écran EA (éventuellement de façon partiellement superposée à l'image principale IP), est une vue schématique de face de sa partie arrière PR. Ainsi, lorsque le conducteur regarde l'écran EA, il se retrouve dans la position d'une personne qui observe sa voiture VA par l'arrière à l'intérieur de la zone avant ZA qui précède ladite voiture VA.

Chaque combinaison affichée d'une image principale IP et d'une image complémentaire IC, constitue une image d'environnement représentative de la réalité sous une forme dite « augmentée » (du fait de l'ajout de la représentation d'une voiture VA et d'éléments représentatifs de la zone complémentaire ZC dans laquelle est située la voiture VA (comme par exemple des prolongements PM de marquage au sol MS)). Grâce à ces images de réalité augmentée affichées, le conducteur à réellement l'illusion en temps réel de se voir conduire sa voiture VA.

On notera que certaines combinaisons d'image principale IP et d'image complémentaire IC peuvent être représentatives de la réalité sous une forme encore plus augmentée. En effet, le module de traitement MT et/ou le module de calcul MC peu(ven)t par exemple obtenir des informations de conduite et/ou des informations de navigation et adjoindre à certains premiers et/ou seconds ensembles de données d'image des données qui sont représentatives de ces informations obtenues afin qu'elles puissent faire partie des combinaisons d'images (IP, IC) affichées par l'écran EA. Ces informations peuvent être soit incrustées, soit superposées en des endroits prédéfinis des combinaisons d'images (IP, IC) affichées.

Tout type d'information disponible dans un véhicule VA, notamment auprès de l'ordinateur de bord OB, ou pouvant être déterminée à partir (ou déduite) d'information(s) disponible(s) dans le véhicule VA, peut faire l'objet d'une adjonction dans (ou sur) une partie au moins d'une combinaison d'images (IP, IC).

Le module de traitement MT et/ou le module de calcul MC peu(ven)t notamment déduire ou déterminer des informations de conduite, qu'il(s) rapporte(nt) à la position du véhicule VA par rapport à la zone avant ZA qui le précède, d'informations qui sont fournies par des équipements du véhicule VA et de la position géographique et/ou des dimensions du véhicule VA. On comprendra en effet que si l'on dispose dans le véhicule VA d'informations de navigation qui permettent de connaître sa position, le module de traitement MT et/ou le module de calcul MC est (sont) alors en mesure de déterminer les coordonnées géographiques de la région qui est occupée par la zone avant ZA, compte tenu des dimensions connues du champ d'observation de la caméra CV, puis il(s) peu(ven)t déterminer des informations relatives à cette région et/ou à son voisinage (plus ou moins étendu) afin de les adjoindre aux combinaison d'images (IP, IC) à afficher, éventuellement au niveau de leurs positions réelles ou correspondantes au sein de la zone avant ZA et/ou de la zone complémentaire ZC.

Le module de traitement MT et/ou le module de calcul MC peu(ven)t par exemple récupérer périodiquement des informations disponibles, puis éventuellement les analyser et/ou les traiter, puis les adjoindre à une image principale IP et/ou une image complémentaire IC s'il(s) est (sont) programmé(s) pour cela ou s'il(s) estime(nt) que cela est nécessaire. Mais, certaines informations, comme par exemple des alarmes ou alertes, peuvent être éventuellement transmises de façon automatique au module de traitement MT et/ou au module de calcul MC afin qu'il(s) procède(nt) immédiatement à leur adjonction dans (ou sur) une image principale IP et/ou une image complémentaire IC à afficher.

Parmi les nombreuses informations de conduite qui peuvent être adjointes par le module de traitement MT et/ou le module de calcul MC aux combinaisons d'images (IP, IC) à afficher, on peut notamment citer (non limitativement) :
- la vitesse du véhicule VA,
- le régime moteur du véhicule VA,
- la température à l'extérieur du véhicule VA,
- le temps qui sépare le véhicule VA d'un obstacle qui le précède, comme par exemple un piéton, un animal, un autre véhicule, ou un objet,
- la position d'un élément dangereux par rapport au véhicule VA,
- la quantité d'essence qui reste dans le réservoir,
- l'estimation du nombre de kilomètres qui peuvent encore être parcourus par le véhicule VA compte tenu de la quantité d'essence restant dans son réservoir et de la consommation d'essence,
- l'heure et/ou la date,
- un risque de dérapage, compte tenu de la température extérieure et/ou des conditions climatiques (pluie, neige, verglas),
- une alerte de crevaison (ou de dégonflement) d'un pneu,
- une alerte d'ouverture de porte,
- l'utilisation en cours d'un clignotant,
- une estimation des dimensions d'un emplacement de stationnement, situé à côté ou devant le véhicule VA,
- une possibilité/impossibilité de stationner.

Parmi les nombreuses informations de navigation qui peuvent être adjointes par le module de traitement MT et/ou le module de calcul MC aux combinaisons d'images (IP, IC) à afficher et qui doivent être fournies par un (ou dérivées d'un) système de navigation délivrant des informations sur l'environnement du véhicule VA et implanté dans le véhicule VA, on peut notamment citer (non limitativement) :
- la désignation de l'endroit où se trouve située une partie au moins de la zone ZA, comme par exemple le nom d'une voie de circulation ou d'une ville ou d'une forêt,
- l'indication d'au moins une voie de circulation voisine de la zone avant ZA ou adjacente à cette dernière,
- l'estimation de la distance restante et/ou du temps restant par rapport à une destination qui a été préalablement fournie,
- l'estimation de la distance parcourue et/ou du temps écoulé depuis le départ d'un lieu préalablement fourni.

En rapportant des informations de conduite et/ou de navigation sur des combinaisons d'images (IP, IC) incluant la représentation du véhicule VA, et en rapportant ces informations par rapport à la position effective du véhicule VA, on centralise ces informations en un même endroit et on les rattache à la réalité (en l'augmentant), facilitant ainsi leur compréhension par les passagers, et en particulier par le conducteur.

On notera que l'écran EA peut éventuellement faire partie du dispositif D, en particulier si il ne sert qu'à afficher les combinaisons d'images (IP, IC) qu'il produit.

Comme cela est illustré non limitativement sur la figure 1, le module de traitement MT et le module de calcul MC peuvent par exemple être implantés (par exemple stockés) dans l'ordinateur de bord OB du véhicule VA. Mais cela n'est pas obligatoire. Ils pourraient en effet faire partie d'un boîtier dédié ou d'une carte électronique couplé(e) à l'ordinateur de bord OB, ou à l'écran EA et à la caméra CV, via un bus (éventuellement multiplexé).

Par conséquent, le module de traitement MT et le module de calcul MC peuvent être réalisés sous la forme de modules logiciels (ou informatiques), ou de circuits électroniques ou encore d'une combinaison de circuits électroniques et de modules logiciels.

Il est important de noter que l'invention peut être également considérée sous l'angle d'un procédé de fourniture d'images, pouvant être notamment mis en oeuvre au moyen d'un dispositif de fourniture d'images D présenté ci-avant. Les fonctionnalités offertes par la mise en oeuvre du procédé selon l'invention étant identiques à celles offertes par le dispositif D présenté ci-avant, seule la combinaison de fonctionnalités principales offerte par le procédé est présentée ci-après.

Ce procédé de fourniture d'images consiste :
- à acquérir au moyen d'une caméra CV des données constituant des images vidéo d'une zone avant ZA située devant un véhicule VA,
- à traiter les données d'image vidéo acquises afin de former des premiers ensembles de données constituant chacun une image principale IP représentative de la zone avant ZA et destinée à être affichée par l'écran EA dans une première partie P1, et
- à déterminer à partir de chaque premier ensemble de données un second ensemble de données constituant une image complémentaire IC, représentative, d'une part, d'une zone complémentaire ZC qui est située au moins en partie juste derrière la zone avant ZA et dans laquelle est situé le véhicule VA, et d'autre part, de la position de ce véhicule VA, et destinée à être affichée par l'écran EA dans une seconde partie P2 complémentaire de la première partie P1.

L'invention ne se limite pas aux modes de réalisation de dispositif et de procédé de fourniture d'images décrits ci-avant, seulement à titre d'exemple, mais elle englobe toutes les variantes que pourra envisager l'homme de l'art dans le cadre des revendications ci-après.

## Revendications

1. Dispositif (D) de fourniture d'images pour un passager d'un véhicule (VA) muni d'un écran (EA) propre à afficher des images définies par des données, **caractérisé en ce qu'**il comprend i) des moyens de traitement (MT) agencés pour traiter des données issues d'une caméra (CV) et constituant des images vidéo d'une zone avant (ZA) située devant ledit véhicule (VA), de manière à former des premiers ensembles de données constituant chacun une image principale (IP) représentative de ladite zone avant (ZA) et destinée à être affichée par ledit écran (EA) dans une première partie (P1), et ii) des moyens de calcul (MC) agencés pour déterminer à partir de chaque premier ensemble de données un second ensemble de données constituant une image complémentaire (IC), représentative, d'une part, d'une zone complémentaire (ZC) située au moins en partie juste derrière ladite zone avant (ZA) et dans laquelle est situé ledit véhicule (VA), et d'autre part, de la position dudit véhicule (VA), et destinée à être affichée par ledit écran (EA) dans une seconde partie (P2) complémentaire de ladite première partie (P1).

2. Dispositif selon la revendication 1, **caractérisé en ce que** lesdits moyens de calcul (MC) sont agencés pour déterminer des marquages au sol (MS) dans chaque premier ensemble de données, puis pour déterminer des prolongements (PM) de certains au moins desdits marquages au sol déterminés (MS) dans ladite zone complémentaire (ZC) en vue de leur affichage au sein d'une image complémentaire (IC) dans ladite seconde partie (P2) de l'écran (EA).

3. Dispositif selon la revendication 2, **caractérisé en ce que** lesdits moyens de calcul (MC) sont agencés pour déterminer lesdits prolongements de marquage au sol (PM) par reproduction et transformation des pixels des données des images principales (IP) qui définissent lesdits marquages au sol (MS) au voisinage de leurs côtés inférieur (CI) et latéraux (CLi).

4. Dispositif selon l'une des revendications 1 à 3, **caractérisé en ce que** ladite image complémentaire (IC) encadre ladite image principale (IP) sur un côté inférieur (CI) et au moins un côté latéral (CLi).

5. Dispositif selon l'une des revendications 1 à 4, **caractérisé en ce que** lesdits moyens de calcul (MC) sont agencés pour former des seconds ensembles de données constituant chacun une image complémentaire (IC) virtuelle comportant une représentation de ladite zone complémentaire (ZC) et une représentation dudit véhicule (VA) dans cette zone complémentaire (ZC) en une position correspondant à sa position réelle.

6. Dispositif selon la revendication 5, **caractérisé en ce que** ladite représentation du véhicule (VA) est une vue schématique de l'arrière du véhicule (VA).

7. Dispositif selon l'une des revendications 1 à 6, **caractérisé en ce que** lesdits moyens de traitement (MT) et/ou lesdits moyens de calcul (MC) sont propres à être implantés dans un ordinateur de bord (OB) dudit véhicule (VA).

8. Dispositif selon l'une des revendications 1 à 7, **caractérisé en ce qu'**il comprend ladite caméra (CV) et/ou ledit écran (EA).

9. Procédé de fourniture d'images pour un passager d'un véhicule (VA) muni d'un écran (EA) propre à afficher des images constituées par des données, **caractérisé en ce qu'**il consiste i) à acquérir au moyen d'une caméra (CV) des données constituant des images vidéo d'une zone avant (ZA) située devant ledit véhicule (VA), ii) à traiter lesdites données d'image vidéo acquises de manière à former des premiers ensembles de données constituant chacun une image principale (IP) représentative de ladite zone avant (ZA) et destinée à être affichée par ledit écran (EA) dans une première partie (P1), et iii) à déterminer à partir de chaque premier ensemble de données un second ensemble de données constituant une image complémentaire (IC), représentative, d'une part, d'une zone complémentaire (ZC) située au moins en partie juste derrière ladite zone avant (ZA) et dans laquelle est situé ledit véhicule (VA), et d'autre part, de la position dudit véhicule (VA), et destinée à être affichée par ledit écran (EA) dans une seconde partie (P2) complémentaire de ladite première partie (P1).

10. Utilisation du dispositif de fourniture d'images (D) selon l'une des revendications 1 à 8 et du procédé de fourniture d'images selon la revendication 9 dans un véhicule automobile.

## Claims

1. Device (D) for supplying images to a passenger in a vehicle (VA) equipped with a screen (EA) adapted to display images defined by data, **characterised in that** it comprises i) processing means (MT) set up to process data from a camera (CV) which form video images of a front region (ZA) located in front of said vehicle (VA), so as to produce first sets of data which each form a main image (IP), representing said front region (ZA) and intended for display by said screen (EA) in a first portion (P1), and ii) calculation means (MC) set up to determine, from each first set of data, a second set of data which form a complementary image (IC), representing on the one hand a complementary region (ZC) which is located at least in part just behind said front region (ZA) and in which said vehicle (VA) is located, and on the other hand the position of said vehicle (VA), and intended to be displayed by said screen (EA) in a second portion (P2) complementary to said first portion (P1).

2. Device according to claim 1, **characterised in that** said calculation means (MC) are set up to determine markings (MS) on the ground in each first set of data, and subsequently to determine extensions (PM) of at least some of said determined markings (MS) on the ground into the complementary region (ZC) with a view to displaying them within a complementary image (IC) in said second portion (P2) of the screen (EA).

3. Device according to claim 2, **characterised in that** said calculation means (MC) are set up to determine said extensions (PM) of markings on the ground by reproducing and transforming pixels of the data for the main images (IP) which define said markings (MS) on the ground in the vicinity of the lower (CI) and lateral (CLi) edges thereof.

4. Device according to any one of claims 1 to 3, **characterised in that** said complementary image (IC) frames said main image (IP) on a lower edge (CI) and at least one lateral edge (CLi).

5. Device according to any one of claims 1 to 4, **characterised in that** said calculation means (MC) are set up to form second sets of data, each forming a virtual complementary image (IC) comprising a representation of said complementary region (ZC) and a representation of said vehicle (VA) in this complementary region (ZC) in a position corresponding to the real position thereof.

6. Device according to claim 5, **characterised in that** said representation of the vehicle (VA) is a schematic view of the rear of the vehicle (VA).

7. Device according to any one of claims 1 to 6, **characterised in that** said processing means (MT) and/or said calculation means (MC) are adapted to be incorporated into an on-board computer (OB) of said vehicle (VA).

8. Device according to any one of claims 1 to 7, **characterised in that** it comprises said camera (CV) and/or said screen (EA).

9. Method for supplying images to a passenger in a vehicle (VA) equipped with a screen (EA) adapted to display images formed by data, **characterised in that** it involves i) capturing, by means of a camera (CV), data which form video images of a front region (ZA) located in front of said vehicle (VA), ii) processing said captured video image data so as to produce first sets of data which each form a main image (IP), representing said front region (ZA) and intended to be displayed by said screen (EA) in a first portion (P1), and iii) determining, from each first set of data, a second set of data which form a complementary image (IC), representing on the one hand a complementary region (ZC) which is located at least in part just behind said front region (ZA) and in which said vehicle (VA) is located, and on the other hand the position of said vehicle (VA), and intended to be displayed by said screen (EA) in a second portion (P2) complementary to said first portion (P1).

10. Use of the device for supplying images (D) according to any one of claims 1 to 8 and of the method for supplying images according to claim 9 in a motor vehicle.

## Patentansprüche

1. Vorrichtung (D) zur Bereitstellung von Bildern für einen Fahrgast eines Fahrzeugs (VA), das mit einem Bildschirm (EA) versehen ist, der zur Anzeige von Bildern geeignet ist, die durch Daten festgelegt sind, **dadurch gekennzeichnet, dass** es Folgendes umfasst:
i) Verarbeitungsmittel (MT), die dafür vorgesehen sind, Daten zu verarbeiten, die von einer Kamera (CV) stammen und Videobilder einer vorderen Zone (ZA), die sich vor dem Fahrzeug befindet, bilden, derart, dass erste Datensätze gebildet werden, die jeweils ein Hauptbild (IP) bilden, das die vordere Zone (ZA) darstellt und das dafür vorgesehen ist, über den Bildschirm (EA) in einem ersten Teil (P1) angezeigt zu werden, und
ii) Rechenmittel (MC), die dafür vorgesehen sind, ausgehend von jedem ersten Datensatz einen zweiten Datensatz zu bestimmen, der ein komplementäres Bild (IC) bildet, das einerseits eine komplementäre Zone (ZC), die sich zumindest zum Teil direkt hinter der vorderen Zone (ZA) befindet und in der sich das Fahrzeug (VA) befindet, und andererseits die Position des Fahrzeugs (VA) darstellt und das dafür vorgesehen ist, über den Bildschirm (EA) in einem zweiten Teil (P1) angezeigt zu werden, der zu dem ersten Teil (P1) komplementär ist.

2. Vorrichtung nach Anspruch 1, **dadurch gekennzeichnet, dass** die Rechenmittel (MC) dafür vorgesehen sind, Markierungen am Boden (MS) in jedem ersten Datensatz zu bestimmen und dann die Verlängerungen (PM) zumindest einiger dieser festgelegten Markierungen am Boden (MS) in der komplementären Zone (ZC) zu bestimmen, um sie in einem komplementären Bild (IC) in dem zweiten Teil (P1) des Bildschirms (EA) anzuzeigen.

3. Vorrichtung nach Anspruch 2, **dadurch gekennzeichnet, dass** die Rechenmittel (MC) dafür vorgesehen sind, die Verlängerungen von Markierungen am Boden (PM) durch Wiedergabe und Umwandlung von Pixeln der Daten der Hauptbilder (IP) zu bestimmen, welche die Markierungen am Boden (MS) in der Nähe ihrer unteren (CI) Seite und ihrer seitlichen Seiten (CLi) festlegen.

4. Vorrichtung nach einem der Ansprüche 1 bis 3, **dadurch gekennzeichnet, dass** das komplementäre Bild (IC) das Hauptbild (IP) an einer unteren Seite (CI) und zumindest einer seitlichen Seite (CLi) einfasst.

5. Vorrichtung nach einem der Ansprüche 1 bis 4, **dadurch gekennzeichnet, dass** die Rechenmittel (MC) dafür vorgesehen sind, zweite Datensätze zu bilden, die jeweils ein komplementäres virtuelles Bild (IC) bilden, das eine Darstellung der komplementären Zone (ZC) und eine Darstellung des Fahrzeugs (VA) in dieser komplementären Zone (ZC) in einer Position, die seiner tatsächlichen Position entspricht, aufweist.

6. Vorrichtung nach Anspruch 5, **dadurch gekennzeichnet, dass** die Darstellung des Fahrzeugs (VA) eine schematische Darstellung des Fahrzeugs (VA) von hinten ist.

7. Vorrichtung nach einem der Ansprüche 1 bis 6, **dadurch gekennzeichnet, dass** die Verarbeitungsmittel (MT) und/oder die Rechenmittel dazu geeignet sind, in einen Bordrechner (OB) des Fahrzeugs (VA) eingebaut zu werden.

8. Vorrichtung nach einem der Ansprüche 1 bis 7, **dadurch gekennzeichnet, dass** sie die Kamera (CV) und/oder den Bildschirm (EA) umfasst.

9. Verfahren zur Bereitstellung von Bildern für einen Fahrgast eines Fahrzeugs (VA), das mit einem Bildschirm (EA) versehen ist, der zur Anzeige von Bildern geeignet ist, die durch Daten festgelegt sind, **dadurch gekennzeichnet, dass** es darin besteht,
i) mittels einer Kamera (CV) Daten zu erfassen, die Videobilder einer vorderen Zone (ZA) bilden, die sich vor dem Fahrzeug (VA) befindet,
ii) die erfassten Videobilddaten zu verarbeiten, derart, dass erste Datensätze gebildet werden, die jeweils ein Hauptbild (IP) bilden, das die vordere Zone (ZA) darstellt und das dafür vorgesehen ist, durch den Bildschirm (EA) in einem ersten Teil (P1) angezeigt zu werden, und
iii) ausgehend von jedem ersten Datensatz einen zweiten Datensatz zu bestimmen, der ein komplementäres Bild (IC) bildet, das einerseits eine komplementäre Zone (ZC), die sich zumindest zum Teil direkt hinter der vorderen Zone (ZA) befindet und in der sich das Fahrzeug (VA) befindet, und andererseits die Position des Fahrzeugs (VA) darstellt und das dafür vorgesehen ist, über den Bildschirm (EA) in einem zweiten Teil (P1) angezeigt zu werden, der zu dem ersten Teil (P1) komplementär ist.

10. Verwendung der Vorrichtung zur Bereitstellung von Bildern (D) nach einem der Ansprüche 1 bis 8 und des Verfahrens zur Bereitstellung von Bildern nach Anspruch 9 in einem Kraftfahrzeug.
